# FASCICULE DE BREVET EUROPEEN

(11) **EP 2 553 389 B1**
(45) Date de publication et mention de la délivrance du brevet: **25.06.2014**
(21) Numéro de dépôt: 11718447.3
(22) Date de dépôt: 01.04.2011
(51) Int. Cl.: G01C 15/00, G01C 15/02, B63B 9/00

(54) **PROCÉDÉ ET SYSTÈME D'AIDE AU POSITIONNEMENT D'UNE PIÈCE SUR UN ÉLÉMENT DE STRUCTURE.**
HILFSVERFAHREN UND HILFSSYSTEM ZUR POSITIONIERUNG EINER KOMPONENTE AUF EINEM BAUELEMENT
METHOD AND SYSTEM FOR HELPING TO POSITION A COMPONENT ON A STRUCTURAL ELEMENT

(30) Priorité: 02.04.2010 FR 1052534
(43) Date de publication de la demande: 06.02.2013
(73) Titulaire: DCNS, 75015 Paris (FR)
(72) Inventeur: LE MER, Erwan, F-56690 Nostang (FR); FRETIGNY, Yves, F-56270 Ploemeur (FR); LE SCOLAN, Eric, F-56700 Kervignac (FR)
(74) Mandataire: Blot, Philippe Robert Emile
(86) Numéro de dépôt international: PCT/FR2011/050742
(87) Numéro de publication internationale: WO 2011/121256

(56) Documents cités:
- WO-A-2005/025199
- FR-A- 2 770 317
- US-A- 5 646 859
- US-A- 5 651 600

## Description

L'invention concerne un procédé et un système d'aide au positionnement d'une pièce sur un élément de structure.

Le document US 5651600A divulgue un procédé du type comportant les étapes consistant à :
- élaborer une image destinée à être projetée sur la paroi de l'élément de structure au moyen d'un projecteur, à partir d'une maquette virtuelle de la structure et de la position et de l'orientation du projecteur par rapport à la structure, ladite image comportant un contour délimitant une zone d'implantation de la pièce sur la paroi de l'élément de structure, la paroi de l'élément de structure devant servir de support de projection pour ledit contour ;
- projeter l'image ainsi élaborée sur l'élément de structure ;
- placer la surface de la pièce devant venir en vis-à-vis de la paroi, à l'intérieur du contour projeté sur l'élément de structure.

Lors de la production d'une structure, par exemple un navire de surface ou un submersible, après la réalisation ou la pose des éléments principaux de la structure, tels que la coque et les subdivisions principales de celle-ci, intervient une phase d'implantation de différentes pièces secondaires sur les éléments de la structure. Les pièces secondaires sont par exemple des attaches, des carlingages, des pièces de structure ou encore des pièces en attente d'équipement, tel que des équipements électriques ou l'équivalent. Pour un navire de moyen tonnage, tel qu'une frégate, il s'agit ainsi de positionner puis de fixer de l'ordre de 50 000 pièces.

Actuellement, sur le chantier de réalisation, un opérateur positionne une pièce sur un élément de structure à l'aide d'un plan papier réalisé en bureau d'étude, puis imprimé. Les cotations indiquées sur ce plan sont à prendre par rapport à un référentiel local de la structure également indiqué sur le plan. Pour chaque pièce à positionner, l'opérateur doit alors identifier, en position et en orientation, le référentiel local. L'opérateur doit ensuite reporter, sur la paroi de l'élément de structure, les cotations indiquant la position et l'orientation convenable par rapport au référentiel local, de la surface de la pièce ou base venant en appui sur l'élément de structure.

Cette méthode de positionnement classique requiert un temps important, non seulement pour la préparation des plans, mais surtout pour leur utilisation sur le chantier. De plus, cette méthode présente l'inconvénient de recourir à un référentiel local. En outre, dans les conditions particulièrement difficiles d'un chantier (encombrement, pénombre, etc.), la lecture des plans et la prise de mesures, souvent effectuée manuellement, sont des sources d'erreurs sur le positionnement exact de la pièce.

Pour optimiser le positionnement de la pièce sur l'élément de structure préalablement à sa fixation, il a été proposé d'utiliser des systèmes d'aide au positionnement permettant de projeter, sur la paroi de l'élément de structure utilisée comme écran, le contour de l'empreinte de la base de la pièce. La projection est faite de telle sorte qu'elle trace précisément, en position et en orientation, la zone d'implantation de la pièce. Un tel système, utilisé dans la construction d'aéronefs, est divulgué par le document WO2005/025199 A2.

Les pièces secondaires à fixer sur la paroi d'un élément de structure d'un navire sont souvent des attaches de support d'un équipement, celui-ci n'étant pas directement fixé contre la paroi de l'élément de structure. L'attache est ainsi munie de moyens de liaison destinés à coopérer avec des moyens de liaison conjugués prévus sur l'équipement à supporter.

Une attache est généralement un profilé, dont la base correspond sensiblement à une section transversale. C'est-à-dire que l'attache est destinée à être fixée sur la paroi de sorte que son axe longitudinal s'étende sensiblement parallèlement à la direction normale à la paroi, au niveau de la zone d'implantation. Les moyens de liaison d'une telle attache profilée sont souvent situés au voisinage de l'extrémité de l'attache opposée à la base.

Or, les marges de tolérance sur de telles pièces secondaires étant larges, il est possible que, bien que la base soit correctement positionnée à l'intérieur du contour projeté sur la paroi de l'élément de structure, l'axe longitudinal de l'attache ne soit pas correctement orienté par rapport à la direction normale à la paroi. En conséquence, une fois l'attache fixée, ses moyens de liaison n'ont pas la position et l'orientation requises, ce qui peut être problématique pour la coopération avec les moyens de liaison conjugués de l'équipement à supporter.

Le cas particulier du positionnement d'une attache profilée, orientée sensiblement perpendiculairement à la paroi de l'élément de structure, est illustratif et exacerbe le problème général du positionnement spatial précis d'une pièce à implanter sur la paroi d'un élément de structure.

L'invention a donc pour but de palier les inconvénients précités en proposant un procédé et un système d'aide au positionnement d'une pièce sur la paroi d'un élément de structure, permettant, en particulier, d'obtenir un meilleur positionnement spatial de la pièce.

L'invention est définie par les revendications.

Afin d'aider un opérateur lors de l'implantation d'une pièce sur la paroi d'un élément de la structure, une image adaptée est projetée. Cette image contient des données géométriques fournissant visuellement à l'opérateur les informations qui lui sont nécessaires pour positionner correctement la pièce avant de la fixer. Cette image comporte des données à projeter sur des supports de projection différents. Elle comporte un tracé correspondant au contour de l'empreinte, sur la paroi, de la surface d'appui de la pièce, surface devant venir en vis-à-vis de la paroi. Elle comporte également au moins un motif additionnel tel qu'un segment de droite correspondant à une arête ou une génératrice prédéterminée de la pièce, s'étendant à l'écart de la surface d'appui de la pièce sur la paroi. Le tracé doit être projeté sur la paroi pour fournir une donnée de positionnement de la base de la pièce sur la paroi. Le motif additionnel doit être projeté sur la pièce elle-même, pour fournir une donnée de positionnement de la pièce par rapport à la direction normale à la paroi.

L'invention et ses avantages seront mieux compris à la lecture de la description qui va suivre, donnée uniquement à titre d'exemple, et faite en se référant aux dessins annexés, dans lesquels :
- la figure 1 est une représentation schématique d'un système d'aide au positionnement d'une pièce sur la paroi d'un élément de structure ; et,
- les figures 2 à 4 représentent schématiquement différentes étapes du procédé utilisant le système de la figure 1.

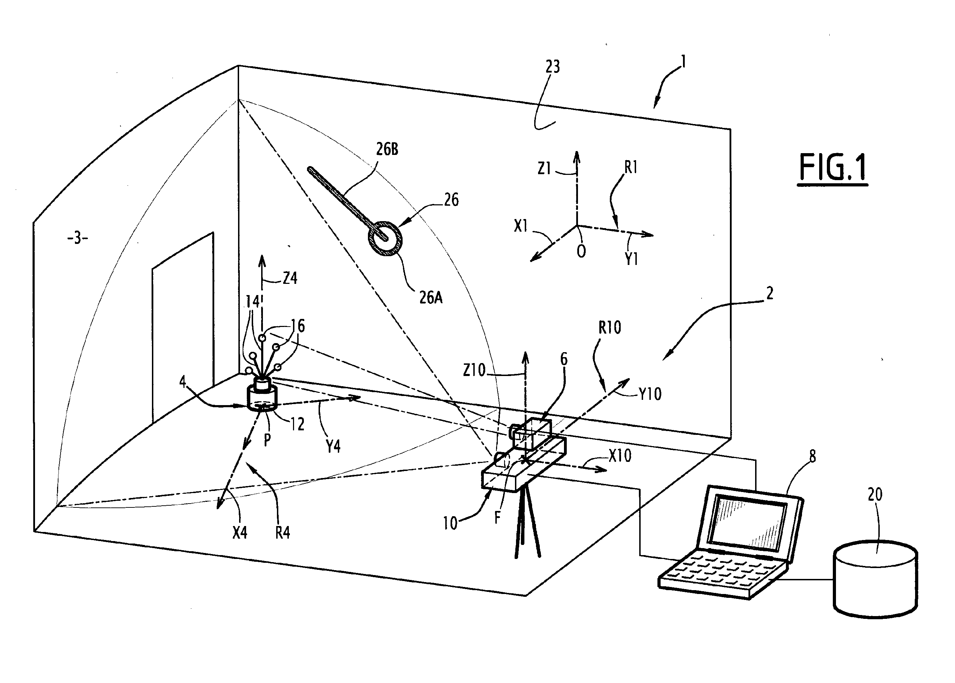

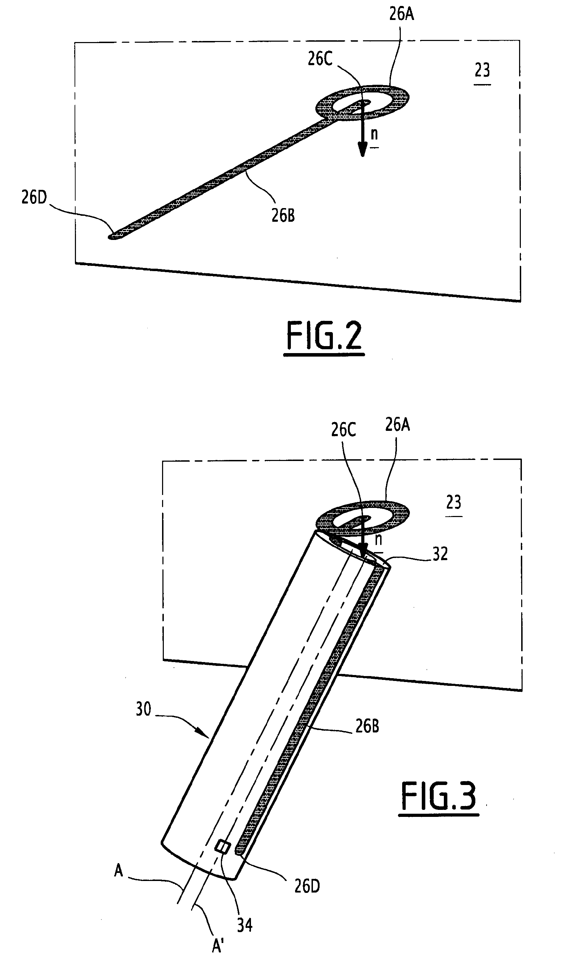

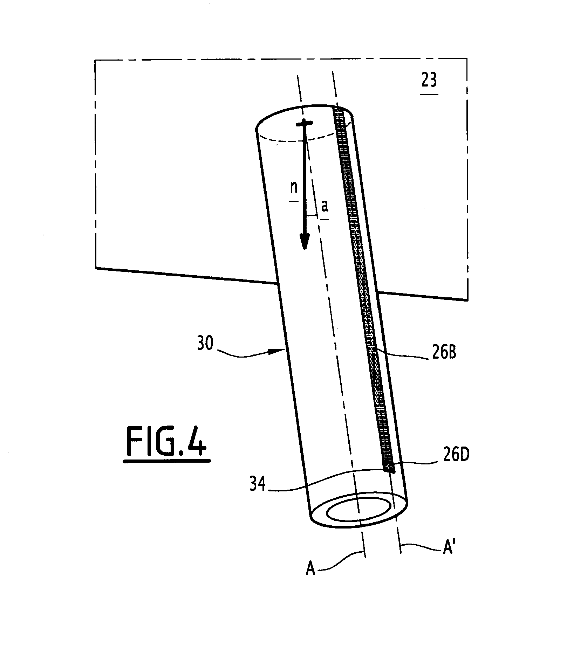

Sur la Figure 1, un système mobile d'aide au positionnement 2 est déployé dans un local 3 d'une structure 1 en construction dans le but d'aider un opérateur à implanter une pièce 30 (représentée sur les figures 2 à 4) sur la paroi 23 d'une cloison du local en tant qu'élément de structure.

Le système 2 comporte une balise de positionnement 4, une caméra infrarouge 6, un ordinateur 8 et un projecteur 10.

Tout au long du présent document, par « positionnement », on entend la position et l'orientation d'un solide dans un référentiel.

La balise 4 est une mire tridimensionnelle. Elle comporte un socle 12 muni de plusieurs bras 14, de longueur et d'orientation différentes. L'extrémité de chaque bras 14 porte une sphère 16 apte à réfléchir la lumière infrarouge. La balise 4 définit un référentiel local R4 constitué d'un repère (X4, Y4, Z4) attaché à un point P de la balise 4. La position et l'orientation de la balise 4 par rapport à la structure 1, c'est-à-dire par rapport à un référentiel absolu R1 constitué d'un repère (X1, Y1, Z1) attaché à un point O de la structure 1, sont connues au moyen d'une étape initiale de calibration. En variante, la balise 4 est constituée par un ensemble de pastilles réfléchissantes positionnées dans le local 3.

La caméra 6 est solidaire du projecteur 10. Elle est par exemple fixée sur le projecteur 10 ou intégrée, avec le projecteur 10, dans un seul appareil. La caméra 6 est apte à émettre périodiquement un flash en lumière infrarouge pour illuminer la balise 4, et à acquérir simultanément une image de la balise 4, et à transmettre l'image ainsi acquise à l'ordinateur 8 auquel la caméra 6 est connectée.

L'ordinateur 8 comporte notamment, reliés entre eux, un processeur, des moyens de mémorisation, une interface d'entrée-sortie, ainsi qu'une horloge de synchronisation. L'ordinateur 8 est connecté par son interface d'entrée-sortie à la fois à la caméra 6 et au projecteur 10. Le processeur de l'ordinateur 8 est apte à exécuter les instructions de programmes d'ordinateur stockées dans ses moyens de mémorisation. En particulier, l'ordinateur 8 comporte un système d'exploitation permettant d'offrir un environnement de fonctionnement à différents modules logiciels d'application.

Parmi ces modules logiciels d'application, l'ordinateur 8 comporte un module logiciel de reconnaissance de forme et de positionnement de la balise qui, lorsqu'il est exécuté par l'ordinateur 8, est apte à analyser l'image transmise par la caméra 6 pour y reconnaître la forme de la balise 4. Puis, à partir de la forme reconnue, le module de reconnaissance est apte à en déduire le positionnement de la caméra 6 par rapport à la balise 4.

En effet, l'image de la balise 4 dépend de la position de la caméra 6 par rapport à la balise 4. Ainsi, à partir de l'image de la balise 4 acquise par la caméra 6, il est possible de déterminer le positionnement de la caméra 6 par rapport à la balise 4. L'homme du métier sait réaliser des logiciels adaptés pour effectuer un tel traitement de l'image.

Ainsi, le positionnement calculé en sortie du module de reconnaissance de forme et de positionnement de la balise correspond à la position et à l'orientation de la caméra 6 dans le référentiel local R4.

La caméra 6 étant fixée au projecteur 10, le positionnement du projecteur 10 dans le référentiel local R4 est déduit du positionnement de la caméra 6 dans le référentiel local R4 par une translation et une rotation prédéfinies.

Le positionnement relatif du projecteur 10 est caractérisé par trois coordonnées spatiales de position d'un point F du projecteur 10, ainsi que par trois coordonnées d'orientation d'un repère R10 (X10, Y10, Z10) associé au point F. De préférence, le point F est le foyer du système optique du projecteur 10, et l'axe X10 est l'axe optique de ce système optique.

L'ordinateur 8 comporte également une base de données ainsi qu'un module logiciel d'élaboration d'une maquette virtuelle de la structure.

Comme cela est bien connu de l'homme du métier qui sait comment la construire, la base de données, représentée schématiquement sur la figure 1 et portant la référence 20, comporte une pluralité d'objets qui correspondent chacun à un objet de la structure 1, que ce soit les éléments de structure ou les pièces à implanter. Dans la base de données 20, chaque objet est associé à une pluralité d'attributs permettant de le décrire. En particulier, certains attributs permettent de définir géométriquement tout ou partie de la forme de l'objet correspondant et d'en donner le positionnement par rapport au référentiel absolu R1.

Ainsi, la base de données comporte, entre autres, des attributs définissant la forme et le positionnement absolu de la base 32 de la pièce 30 à implanter, ainsi que le positionnement absolu d'une génératrice A' de la pièce 30, et d'un point particulier 34 de cette génératrice.

Le module d'élaboration comporte une interface homme/machine qui offre à l'opérateur la possibilité de sélectionner un ensemble d'objets d'intérêt, tels que la pièce à fixer et l'élément de structure sur lequel cette pièce particulière doit être implantée.

Sur la base des attributs des objets sélectionnés, une représentation virtuelle en trois dimensions de la structure 1, aussi dénommée maquette ou maquette virtuelle, est construite par le module d'élaboration exécuté par l'ordinateur 8.

Enfin, l'ordinateur 8 comporte un module logiciel de perspective qui, lorsqu'il est exécuté, génère une image virtuelle correspondant à l'observation de la maquette depuis un point de vue et sous un angle d'observation qui concordent avec la position du foyer F et l'orientation de l'axe optique du projecteur 10 par rapport à la structure 1. Le module logiciel de perspective utilise la maquette, donnée par le module d'élaboration, et le positionnement du projecteur 10 dans le référentiel local R4, donné par le module de reconnaissance de forme et de positionnement. Il transforme notamment l'information sur le positionnement du projecteur 10 dans le référentiel local R4, en une information sur le positionnement du projecteur 10 dans le référentiel absolu R1, en utilisant le positionnement de la balise 4 dans le référentiel absolu R1 issu de la calibration.

Le traitement permettant de générer une telle image est connu de l'homme du métier et consiste à projeter chaque point de la maquette, le long d'un rayon du cône de projection ayant pour sommet le centre optique F du projeteur 10, sur un plan orthogonal à l'axe optique de projection 10. L'image ainsi obtenue dans ce plan constitue, après une étape éventuelle de mise à l'échelle, l'image virtuelle à projeter.

L'image virtuelle est transmise de l'ordinateur 8 au projecteur 10. Celui-ci projette une image 26 sur la paroi 23.

L'image 26 comporte le contour 26A de l'empreinte de la base 32 de la pièce 30 sur la paroi 23, ainsi qu'un segment de droite 26B dont une première extrémité 26C se situe à l'intérieur de ce contour.

Lorsque la pièce 30 est correctement positionnée dans l'espace, le segment de droite 26B se superpose à la génératrice A' de la pièce 30 et la seconde extrémité 26D du segment de droite 26B coïncide avec le point particulier 34 de la génératrice A'.

On notera que le projecteur 10 peut être du type permettant la projection d'une image en couleurs. L'utilisation d'un tel projecteur permet d'afficher un grand nombre de pièces simultanément et offre la possibilité de donner des informations supplémentaires à l'opérateur. De plus, de tels projecteurs, même les plus simples disponibles sur le marché, possèdent un cône de projection très ouvert, ce qui est particulièrement appréciable sur un chantier naval où le recul disponible pour projeter une image peut être réduit.

Le projecteur 10 peut être du type à laser, apte à projeter un spot laser sur un support de projection. En mettant à profit la propriété de persistance rétinienne, on fait parcourir au spot laser le pourtour de l'image à projeter, avec une fréquence élevée.

En se reportant aux figures 2 à 4, le procédé d'aide à l'implantation va maintenant être décrit pour le cas d'une pièce tubulaire 30 d'axe longitudinal A. La pièce 30 possède une base 32 formant un disque annulaire, destinée à venir en appui sur la paroi 23.

A la figure 2, comme cela a été présenté ci-dessus, l'image projetée 26 sur la paroi 23 comporte un contour 26A délimitant la zone d'implantation, et un segment de droite 26B.

Le contour 26A de l'image 26 a pour fonction de désigner la zone d'implantation sur la paroi 23. Il est donc projeté sur la paroi 23 sans distorsions. Le contour 26A qui correspond à la base 32 de la pièce 30 a ainsi la forme d'un disque annulaire dont les dimensions sont ajustées à celles de la base 32 de la pièce 30.

En revanche, le segment de droite 26B de l'image 26 qui a pour fonction de désigner une génératrice A' de la pièce 30 n'est pas correctement projeté sur la paroi 23. La seconde extrémité 26D du segment de droite 26B est, par conséquent, projetée sur la paroi 23, à distance du contour 26A.

A la figure 3, l'opérateur approche la pièce 30 et positionne la base 32 sur la zone d'implantation, à l'intérieur du contour 26A.

Puis, tout en conservant au moins un point de contact entre la base 32 et la paroi 23, l'opérateur modifie l'orientation de l'axe longitudinal A de la pièce 30 pour mettre en coïncidence le segment de droite 26B avec la génératrice A' de la pièce 30. Avantageusement et pour un positionnement plus précis, l'opérateur cherche à mettre en coïncidence la seconde extrémité 26D du segment 26B avec le point particulier 34 de la génératrice A' (figure 3).

Lorsque l'une et/ou l'autre de ces coïncidences est obtenue, cela signifie que la pièce 30 est correctement positionnée, à la fois selon la paroi de l'élément de structure et selon la direction normale à cette paroi. En particulier, la direction de l'axe A de la pièce 30 fait un angle a prédéterminé avec la direction normale n à la paroi 23.

Durant cette étape, la pièce 30 constitue le support de projection pour la portion de l'image correspondant au segment de droite 26B. C'est uniquement lorsque la pièce 30 est correctement positionnée spatialement, que le segment de droite 26B est projeté sur la pièce 30 sans distorsions.

Il est à noter que cela impose que le projecteur 10 soit initialement disposé de manière à permettre la projection de l'image à la fois sur la paroi et sur la pièce positionnée sur la paroi.

Il est à noter également qu'il peut subsister une ambiguïté sur l'orientation de la pièce par rapport à la paroi, car le point particulier et le point prédéfini de la pièce peuvent dans certains cas coïncider l'un avec l'autre pour plusieurs positions de la pièce dans un plan de projection qui est défini par le cône de projection du segment de droite depuis le projecteur. Avantageusement, un code visuel de détrompage est intégré à l'image projetée pour indiquer à l'opérateur laquelle parmi les différentes positions possibles il faut choisir.

Enfin, tout en conservant à la pièce 30 le positionnement correct venant d'être trouvé, l'opérateur procède à la fixation de la pièce 30 sur la paroi 23.

L'exemple précédent illustre le cas où la donnée à projeter sur la pièce fournit l'orientation de la pièce par rapport à la direction normale de l'élément de structure au voisinage de la zone d'implantation. Le procédé peut également être mis en oeuvre pour régler par exemple la profondeur de vissage de la pièce sur un élément de structure comportant un taraudage. La donnée à projeter sur la pièce fournit alors la cote ou la hauteur d'un point prédéterminé de la pièce par rapport à l'élément de structure, la donnée à projeter sur l'élément de structure traçant par exemple l'endroit de perçage d'un taraudage de réception de la pièce.

Plus généralement, l'homme du métier constatera que l'image projetée comporte des données géométriques qui doivent être lues sur des supports de projection différents : l'élément de structure et la pièce à implanter elle-même. La donnée projetée sur l'élément de structure fournit le positionnement de la base de pièce selon la surface de l'élément de structure, alors que la donnée projetée sur la pièce, à l'écart de la base, fournit le positionnement de la pièce par rapport à la direction normale à la surface de l'élément de structure.

## Revendications

1. Procédé d'aide au positionnement d'une pièce (30) sur la paroi (23) d'un élément de structure, du type comportant les étapes consistant à :
- élaborer une image destinée à être projetée sur la paroi de l'élément de structure au moyen d'un projecteur (10), à partir d'une maquette virtuelle de la structure et de la position et de l'orientation du projecteur par rapport à la structure, ladite image comportant un contour (26A) délimitant une zone d'implantation de la pièce sur la paroi de l'élément de structure, la paroi de l'élément de structure devant servir de support de projection pour ledit contour ;
- projeter l'image ainsi élaborée sur l'élément de structure ;
- placer la surface de la pièce devant venir en vis-à-vis de la paroi, à l'intérieur du contour projeté sur l'élément de structure ;
**caractérisé en ce que** ladite image élaborée comporte au moins un motif additionnel fournissant une information de positionnement de la pièce par rapport à la direction normale (n) à la paroi de l'élément de structure, ledit motif additionnel correspondant à un ensemble de points prédéfini de la pièce, ladite pièce devant servir de support de projection pour le ou chaque motif additionnel, et **en ce que** le procédé prévoit, tout en conservant un contact entre la pièce et l'élément de structure, de modifier le positionnement de la pièce par rapport à la direction normale à la paroi de l'élément de structure, jusqu'à ce que ledit ensemble de points prédéfini de la pièce coïncide avec ledit motif additionnel.

2. Procédé selon la revendication 1, **caractérisé en ce que** ledit motif additionnel est un segment de droite (26B) limité par une première extrémité (26C) située à l'intérieur dudit contour et une seconde extrémité (26D) située à l'écart dudit contour.

3. Procédé selon la revendication 2, **caractérisé en ce qu'**il consiste, en outre, à faire coïncider ladite seconde extrémité du segment de droite et un point prédéfini dudit ensemble de points de la pièce.

4. Procédé selon l'une quelconque des revendications 2 à 3, **caractérisé en ce que** ledit segment de droite (26B) correspond à une génératrice ou une arête de ladite pièce (30).

5. Système d'aide au positionnement d'une pièce (30) sur la paroi (23) d'un élément de structure comprenant :
- un projecteur (10) ;
- un moyen de localisation apte à déterminer le positionnement du projecteur par rapport à la structure ;
- un ordinateur (8) connecté au moyen de localisation et au projecteur et comportant :
- un module de pilotage du projecteur,
- une base de données (20) comportant une description détaillée des objets constitutifs de la structure,
- un module d'élaboration d'une maquette virtuelle de tout ou partie de la structure, et,
- un module de perspective apte, à partir du positionnement du projecteur par rapport à la structure et de la maquette virtuelle, à générer une image (26) destinée à être projetée sur la paroi (23) de l'élément de structure au moyen du projecteur,
ladite image comportant un contour (26A) délimitant une zone d'implantation de la pièce sur la paroi de l'élément de structure, la paroi de l'élément de structure devant servir de support de projection pour ledit contour, **caractérisé en ce que** ladite image comporte au moins un motif additionnel fournissant une information de positionnement de la pièce par rapport à la direction normale (n) à la paroi de l'élément de structure, ledit motif additionnel correspondant à un ensemble de points prédéfini de la pièce, ladite pièce devant servir de support de projection pour le ou motif additionnel.

6. Système selon la revendication 5, **caractérisé en ce que** ledit moyen de localisation comporte :
- une mire (4) située en une position et avec une orientation prédéfinies par rapport à la structure (1) ;
- une caméra (6) dont le positionnement par rapport au projecteur (10) est connu et qui est apte à acquérir au moins une image de la mire ; et,
- un module de traitement d'image, exécuté par l'ordinateur (8) auquel est connectée la caméra, et apte à déterminer, à partir de l'image de la mire, le positionnement de la caméra par rapport à la structure et, par conséquent, le positionnement du projecteur par rapport à la structure.

## Patentansprüche

1. Verfahren für eine Hilfe zum Positionieren eines Teils (30) an der Wand (23) eines Strukturelements, Schritte umfassend, die darin bestehen:
- ein Bild, das vorgesehen ist, auf die Wand des Strukturelements mittels eines Projektors (10) projiziert zu werden, aus einem virtuellen Modell der Struktur und der Position und Orientierung des Projektors in Bezug auf die Struktur zu erstellen, wobei das Bild eine Kontur (26A) umfasst, die eine Zone der Montage des Teils an der Wand des Strukturelements begrenzt, wobei die Wand des Strukturelements als Projektionsträger für die Kontur dienen soll;
- das so erstellte Bild auf das Strukturelement zu projizieren;
- die Fläche des Teils, die in Gegenüberstellung zur Wand kommen soll, in das Innere der auf das Strukturelement projizierten Kontur zu platzieren;
**dadurch gekennzeichnet, dass** das erstellte Bild mindestens ein zusätzliches Motiv aufweist, das eine Information über die Positionierung des Teils in Bezug auf die Richtung (n) senkrecht zur Wand des Strukturelements liefert, wobei das zusätzliche Motiv einer vorbestimmten Punkteanordnung des Teils entspricht und das Teil als Projektionsträger für das oder jedes zusätzliche Motiv dienen soll, und dass das Verfahren vorsieht, die Positionierung des Teils in Bezug auf die Richtung senkrecht zur Wand des Strukturelements zu modifizieren, bis die vorbestimmte Punkteanordnung des Teils mit dem zusätzlichen Motiv übereinstimmt, wobei ein Kontakt zwischen dem Teil und dem Strukturelement beibehalten wird.

2. Verfahren nach Anspruch 1, **dadurch gekennzeichnet, dass** das zusätzliche Motiv ein Segment einer Geraden (26B) ist, die von einem ersten Ende (26C), das im Inneren der Kontur angeordnet ist, und einem zweiten Ende (26D), das entfernt von der Kontur angeordnet ist, begrenzt ist.

3. Verfahren nach Anspruch 2, **dadurch gekennzeichnet, dass** es außerdem darin besteht, das zweite Ende des Geradensegments und einen vorbestimmten Punkt der Punkteanordnung des Teils in Übereinstimmung zu bringen.

4. Verfahren nach einem beliebigen der Ansprüche 2 bis 3, **dadurch gekennzeichnet, dass** das Geradensegment (26B) einer Mantellinie oder einer Kante des Teils (30) entspricht.

5. Hilfssystem für die Positionierung eines Teils (30) auf der Wand (23) eines Strukturelements, umfassend:
- einen Projektor (10);
- ein Lokalisierungsmittel, das geeignet ist, die Positionierung des Projektors in Bezug auf die Struktur zu bestimmen;
- einen Rechner (8), der mit dem Lokalisierungsmittel und dem Projektor verbunden ist und umfasst:
- ein Modul zur Steuerung des Projektors,
- eine Datenbank (20), die eine detaillierte Beschreibung der Bestandteile der Struktur enthält,
- ein Modul zur Erstellung eines virtuellen Modells der Gesamtheit oder eines Teils der Struktur und
- ein Perspektivenmodul, das geeignet ist, aus der Positionierung des Projektors in Bezug auf die Struktur und des virtuellen Modells ein Bild (26) zu erzeugen, das vorgesehen ist, auf die Wand (23) des Strukturelements mittels des Projektors projiziert zu werden,
wobei das Bild eine Kontur (26A) umfasst, die eine Zone zur Montage des Teils auf der Wand des Strukturelements begrenzt, wobei die Wand des Strukturelements als Projektionsträger für die Kontur dienen soll, **dadurch gekennzeichnet, dass** das Bild mindestens ein zusätzliches Motiv aufweist, das eine Information für die Positionierung des Teils in Bezug auf die Richtung (n) senkrecht zur Wand des Strukturelements liefert, wobei das zusätzliche Motiv einer vorbestimmten Punkteanordnung des Teils entspricht und das Teil als Projektionsträger für das zusätzliche Modell dienen soll.

6. System nach Anspruch 5, **dadurch gekennzeichnet, dass** das Lokalisierungsmittel aufweist:
- ein Visierelement (4), das in einer vorbestimmten Positionierung und Orientierung in Bezug auf die Struktur (1) angeordnet ist;
- eine Kamera (6), deren Positionierung in Bezug auf den Projektor (10) bekannt ist und die geeignet ist, mindestens ein Bild des Visierelements zu beschaffen, und
- ein Modul zur Bildbearbeitung, das von dem Rechner (8), mit dem die Kamera verbunden ist, ausgeführt wird und das geeignet ist, aus dem Bild des Visierelements die Positionierung der Kamera in Bezug auf die Struktur und folglich die Positionierung des Projektors in Bezug auf die Struktur zu bestimmen.

## Claims

1. A method for helping to position a piece (30) on a wall (23) of an element of a structure, including the steps of:
- elaborating an image intended to be projected on the wall of the element by means of a projector (10) from a virtual model of the structure and from the position and the orientation of the projector with respect to the structure, said image including a outline (26A) delimiting an area for implanting the piece on the wall of the element of the structure, the wall of the element of the structure being used as a projection substrate for said outline;
- projecting the thereby elaborated image on the element of the structure;
- placing a surface of the piece which should come and face the wall, inside the outline projected on the element of the structure;
**characterised in that** the elaborated image comprises at least one additional motif providing a piece of information for positioning the piece with respect to a direction (n) normal to the wall of the element of the structure, said additional motif corresponding to a predefined set of points of the piece, said piece being used as a projection substrate for said or each additional motif, and **in that** the method also includes, while keeping contact between the piece and the element of structure, the modification of the positioning of the piece with respect to the direction normal to the wall of the element of structure, until said predefined set of points of the piece coincides with said additional motif.

2. The method according to claim 1, **characterised in that** said additional motif is a line segment (26B) limited by a first end (26C) located inside said outline and a second end (26D) located away from said outline.

3. The method according to claim 2, **characterised in that** it further consists of having the second end of the line segment and a predefined point of said set of points of the piece coincide.

4. The method according to any of claims 2 to 3, **characterised in that** said line segment (26B) corresponds to a generatrix or an edge of said piece (30).

5. A system for helping to position a piece (30) on the wall (23) of an element of a structure, **characterised in that** it comprises:
- a projector (10);
- a localisation means able to determine the position of the projector with respect to the structure;
- a computer (8) connected to the localisation means and to the projector and including:
- a module for controlling the projector,
- a database (20) including a detailed description of the constitutive objects of the structure,
- a module for elaborating a virtual model of all or piece of the structure, and
- a perspective module capable, from the position of the projector with respect to the structure and from the virtual model, of generating an image (26) intended to be projected on the wall (23) of the element of the structure by means of the projector,
said image including an outline (26A) delimiting an area for implanting a piece on the wall of the element of the structure, the wall of the element being used as a projection substrate for said outline, **characterised in that** said image comprises at least one additional motif providing positioning information of the piece with respect to a direction (n) normal to the wall of the element of the structure, said additional motif corresponding to a predefined set of points of the piece, said piece being used as a projection substrate for said or additional motif.

6. The system according to claim 5, **characterised in that** said localisation means includes:
- a test pattern (4) located in a predefined position and with a predefined orientation with respect to the structure (1);
- a camera (6), the position of which, with respect to the projector (10), is known and which is able to acquire at least one image of the test pattern; and
- an image processing module, executed by the computer (8) to which the camera is connected, and able to determine, from the image of the test pattern, the position of the camera with respect to the structure and therefore the position of the projector relative to the structure.
